Europäisches Patentamt

**European Patent Office**

**Office européen des brevets**

(19)

(11) Publication number: **0 184 963**
**A2**

# EUROPEAN PATENT APPLICATION

(12)

(21) Application number: **85402424.7**

(22) Date of filing: **06.12.85**

(51) Int. Cl.⁴: **H 02 M 7/217**

(30) Priority: **13.12.84 US 681016**

(43) Date of publication of application: **18.06.86**
**Bulletin 86/25**

(84) Designated Contracting States: **DE FR GB IT SE**

(71) Applicant: **UNITRODE CORPORATION, 5 Forbes Road, Lexington Massachusetts 02173 (US)**

(72) Inventor: **Patel, Raoji, 90 Flanagan Drive, Framinghan Massachusetts 01701 (US)**

(74) Representative: **Descourtleux, Philippe et al, CABINET BEAU de LOMENIE 55 rue d'Amsterdam, F-75008 Paris (FR)**

(54) **Synchronous power rectifier and applications thereof.**

(57) A synchronous power rectifier of high efficiency incorporates a bipolar power transistor (Q33) operable by a control circuit (80) in a switching mode to rectify the energy from a secondary winding (N32) of a power transformer (T31). The synchronous rectifier reduces or eliminates the need of rectifier diodes, which provides power rectification without the power loss associated with the rectifier diode voltage drops. Moreover, the rectifier switching time is adjustable to accommodate delayed turn-off times of bipolar power devices, as well as the switching signal duration to provide regulation of the output voltage (Vo) independent of the excitation of the primary of the transformer (T31).

ACTORUM AG

The present invention relates to power rectifier circuits, and in particular synchronous power rectifiers incorporating bipolar switching transistors.

In an off-line, switching regulated voltage power supply for applications such as high-density CMOS logic, high-speed ECL logic, etc., the power dissipated in the output rectifiers accounts for at least 20-30 percent of the total input power. Losses from silicon rectifiers could be reduced by substitution of power Schottky rectifiers. However, even with Schottky rectifiers, the power dissipated causes a significant reduction in power supply efficiency.

Synchronous rectifiers, although well known in low-power signal applications, have generally been impractical for power applications. Bipolar transistors have previously exhibited high saturation resistance, and required significant base drive current. Moreover, the reverse breakdown characteristics were unsuitable for power rectification. Furthermore, the storage time exhibited by previously available bipolar transistors was excessive for useful high-frequency switching regulators.

Alternatively, power MOSFET devices may be used as switching elements. However, the power MOSFET devices presently known have a reverse breakdown characteristic similar to that of a diode (temperature-dependent, high forward drop) and therefore unattractive for this application.

The synchronous power rectifier of the present invention, as characterised in claim 1, incorporates a bipolar device for operation therein (BISYN by Unitrode Corporation of Lexington, Massachusetts), and novel circuitry operable to overcome limitations thereof. The salient features of the bisyn includes low saturation resistance ($R_{ce}$(SAT)) on the order of a few milli-ohms, low saturation voltage with high forced gain, ultra-fast switching times, and first and third quadrant switching capability. Moreover, the parameters of the BISYN have a lower temperature coefficient in comparison with power MOSFET. Moreover, the rectifier losses of the present semiconductor BISYN elements is less than the Schottky, power MOSFET, and conventional silicon diode elements.

The synchronous rectifier circuitry of the present invention includes the further features which automatically adjust switching signals for BISYN switching times. The adjustment is responsive to the particular bisyn switching speed.

Various synchronous rectifier circuit topologies are shown which include a single-ended and push-pull synchronous rectifier. Moreover, circuit embodiments include pulse width modulation of the synchronous rectifier to achieve voltage regulation. The resulting circuits provide a power supply having significant improvements in efficiency and reduction in cost in comparison with currently available power supplies of other technologies.

The features of the present invention mentioned above and further features can be better understood by reading the following detailed description, taken together with the drawing, wherein:

Fig. 1 is a schematic diagram showing a synchronous rectifier in a single-ended circuit configuration;

Fig. 2 is a schematic diagram showing the synchronous rectifier in a center tap output configuration; and

Fig. 3 is a schematic diagram showing the single-ended synchronous rectifier operable under pulse width modulation (PWM) regulator control.

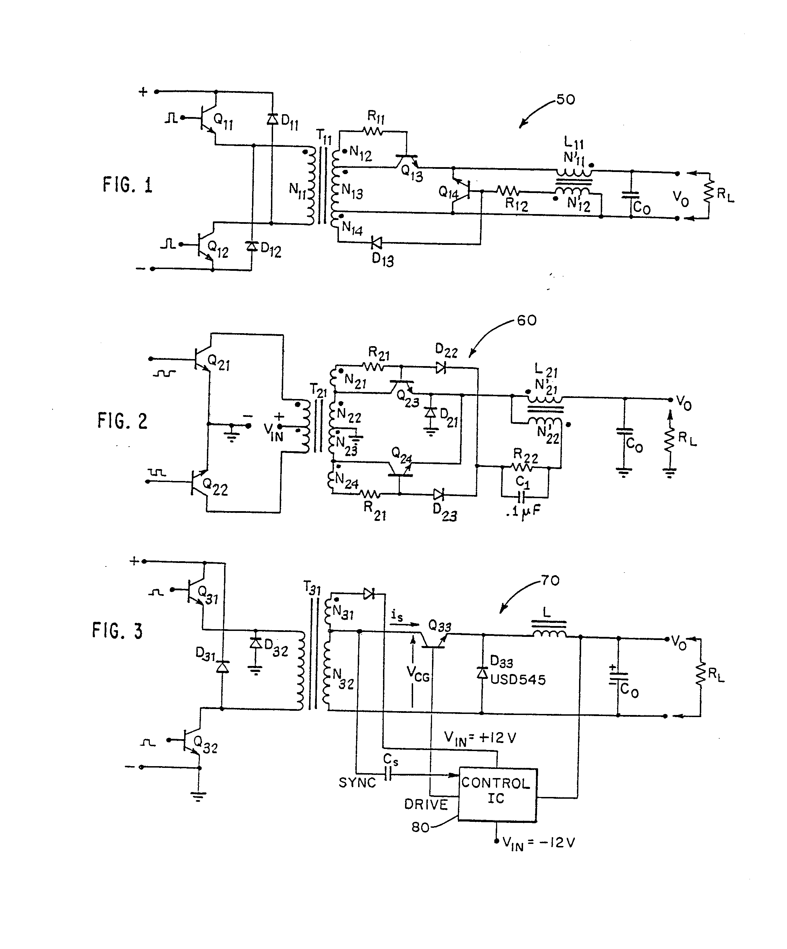

A synchronous single-ended rectifier circuit 50 is shown in Fig. 1. The circuit is energized by causing transistor Q11 and Q12 to simultanously conduct, thereby placing a flow of current through transistor Q11 the primary winding having turns N11 of transformer T11 and through transistor Q12 to the negative return. During periods between the energization of transistors Q11 and Q12, the inductance of the primary transformer T11 will cause a flow of current to continue, wherein the flow is maintained through diodes D11 and D12. Transformer T11 has a secondary winding including several sections having turns N12, N13 and N14, which typically comprise a single winding having several taps thereon. Alternately, the various sections of the secondary of

transformer T11 may be formed from isolated sets of windings, and coupled to the respective circuit elements by appropriate coupling elements such as may be known in the art.

In operation, an output voltage Vo, delivered to load RL, is produced across capacitor Co which is charged by a flow of current through inductor L11 having a winding of turns N'11. The flow is supplied by transformer T11 secondary section having turns N13 through transistor Q13 which is energized while transistors Q11 and Q12 are energized. The transistor Q13 is energized by a driving voltage developed across secondary winding section having turns N12 through resistor R11.

When transistors Q11 and Q12 cease conducting, and the flow of current from the primary of transformer T11 now flows through diodes D11 and D12, transistor Q13 is turned off. The inductor L11, having a flow of current, will maintain a flow of current through transistor Q14, which is energized by a signal produced by a second winding having turns N'12 on inductor L11 through resistor R12. Having begun a current flow through transistor Q14, the flow would ordinarily continue, even after the transistors Q11, Q12, and Q13 were once again energized, since transistor Q14 is energized by a signal produced from the corresponding induced signal on the second winding of L11. However, transistor Q14 is turned off by a flow of current through diode D13 from a secondary section having turns N14, which removes the signal produced by the winding of inductor L11, as well as depleting the charge storage from transistor Q14. Moreover, as long as current is flowing through diode D13 from transistor Q14, a signal is produced in the secondary winding having turns N12 which opposes the energization signal generated therein, which would otherwise energize transistor Q13. When the flow of current through diode D13 ceases, the energization signal for transistor Q13 is generated in transformer T11 secondary section having turns N12, allowing transistor Q13 to once again conduct. The complete cycle may therefore repeat indefinitely.

A push-pull synchronous power rectifier circuit 60 is shown in Fig.2. The energy is supplied by alternate energization of the primary winding of transformer T21 by alternately energizing transistors Q21 and Q22, wherein the energization period of each transistor is substantially equal. The energization periods of transistors Q21 and Q22 together form substantially the entire time period of the energization cycle, except for short intervening period called dead times, which allow the charge in transistors Q21 and Q22 to decay, thereby avoiding occurrences when both transistors Q21 and Q22 are simultaneously energized.

An output voltage Vo, delivered to load RL, is produced across capacitor Co by a current flowing through inductor L21 in a manner similar to the circuit 50 above. The inductor L21 is alternately energized by a flow of current from either secondary winding section having turns N22 or N23, according to respective energization of transistors Q23 and Q24. Transistors Q23 and Q24 are energized by signals generated by secondary sections having turns N21 and N24, respectively, and each signal passing through the resistor R21. A second winding having turns N'22 on inductor L21 provides a de-energization signal through R22 to be selectively applied through diodes D22 and D23 to transistors Q23 and Q34, respectively. The signal thus applied enhances the turn-offcharacteristics of transistors Q23 and Q24 by depleting the charge stored within the respective base regions thereof.

During the previously mentioned dead times, when neither transistors Q23 nor Q24 are conductive, the current from inductor L21 is provided through diode D21, and such flow is maintained until either transistor Q23 or Q24 becomes conductive.

A regulated power supply 70, incorporating pulse width modulation, is shown in Fig.3. The transformer T31 is energized in the same manner which the primary of transformer T11 is energized in the circuit 50 of Fig. 1, above. Similarly, the output voltage Vo is delivered to load RL, and is produced across capacitor Co from a current flow through inductor L according to the selective energization of transistor Q33 synchronously timed with the flow of current produced through secondary section N32.

During the periods when transistors Q31 and Q32 are not energized, and the flow of current through secondary section N32 drops, the flow of current through the inductor L is maintained by diode D33. The regulation of output voltage Vo is provided by a control circuit 80 wherein the duration of the drive signal for transistor Q33 is controlled by the output voltage as sensed by the control IC, according to pulse width modulation techniques generally known. Moreover, the control circuit 80 is synchronized through the energization of secondary section having turns N32 by a signal provided by secondary section having turns N31, so that the pulse width modulation occurs synchronously with the signal to be rectified.

Other embodiments of the present invention are within the scope of the present invention. For instance, the power supply of the present invention may embody various primary energization techniques as shown in Figs. 1, 2 or 3, or otherwise known in the art. Moreover, the second transistor Q14 of circuit 50 shown in Fig. 1 and the associated synchronous energization circuitry may also be incorporated in the circuits 60 and 70 of Figs. 2 and 3, to replace diodes D21 and D33. Further embodiments, substitutions, and circuit changes by one skilled in the art are clearly within the present invention, which is not to be limited, except by the claims which follow.

CLAIMS:

1.    A synchronous power rectifier characterised by comprising:

a source providing a flow of current at periodic intervals;

a first semiconductor device domprising a bipolar transistor (Q13; Q23, Q24; Q33) connected to receive said flow of current from said source and being synchronously controlled by said source to pass said flow of current during said periodic intervals;

a capacitor (Co);

an inductor (L11; L21; L) connected to said source and said capacitor to receive said flow of current and provide a charging current for said capacitor; and

a second semiconductor element (Q13; D21; D33) connected to provide a second flow of current from said inductor into said capacitor during time intervals wherein said first semiconductor element is not providing flow of current from said source.

2.    The synchronous power rectifier of claim 1, characterised in that said source comprises a transformer (T11; T21; T31) having a secondary winding thereon, said flow of current being provided by a portion (N13; N22, N23; N32) of said secondary winding and said synchronous control being provided by a portion (N12, N14; N21, N24; N31) of said secondary winding.

3.    The synchronous power rectifier of claim 1 or 2, characterised in that said second semiconductor comprises a selectively controlled bipolar semi-conductor (Q14), and said inductor (L11) includes a secondary winding (N'12) connected to cause said second semiconductor to provide said second flow of current.

4.    The synchronous power rectifier of any of claims 1 to 3, characterised by further including means (D13) connected to said second semiconductor (Q14) for turning off said second semiconductor at the onset of said periodic intervals.

5.    The synchronous power rectifier of claim 4, characterised in that said means for turning off said second semiconductor (Q14) further inhibits the conduction of said first semiconductor (Q13) until said flow of current through said second semiconductor ceases.

6. The synchronous power rectifier of claim 1 or 2, characterised in that said source provides a plurality of periodic current flows in a sequence, said synchronous power rectifier further including a plurality of first semiconductor elements (Q23, Q24) each connected to receive one of said plurality of current flows.

7. The synchronous power rectifier of claim 6, characterised in that said inductor (L21) includes a secondary winding (N'22) providing a turn-off signal when said periodic current flow from said source ceases, said synchronous power rectifier further comprising means (D22, D23) to selectively apply said turn-off signal to the particular first semiconductor (Q23, Q24) in conduction during the immediately preceding periodic interval.

8. The synchronous power rectifier of claim 7, characterised in that said means to selectively apply comprises a plurality of diodes (D22, D23), each connected from the inductor secondary (N'22) to each first semiconductor (Q23, Q24).

9. The synchronous power rectifier of claim 1 or 2, characterised by further including regulator means (80) for variably controlling the duration of conduction of said first semiconductor (Q33) to achieve regulation of the voltage across said capacitor (Co).

10. The synchronous power rectifier of claim 9, characterised in that said regulator means (80) is synchronized to said periodic intervals.

11. The synchronous power rectifier of claim 10, characterised in that said regulator means (80) selectively inhibits said synchronous control provided by said source.

1/1

0184963

FIG. 1

FIG. 2

FIG. 3